# EUROPÄISCHE PATENTSCHRIFT

(11) **EP 1 306 709 B1**
(45) Veröffentlichungstag und Bekanntmachung des Hinweises auf die Patenterteilung: **20.08.2008**
(21) Anmeldenummer: 02023280.7
(22) Anmeldetag: 17.10.2002
(51) Int. Cl.: G02B 7/00, G02B 7/182

(54) **Vorrichtung zur Strahlführung eines Laserstrahls**
Laser beam guidance device
Dispositif de guidage d'un faisceau laser

(30) Priorität: 23.10.2001 DE 10151587
(43) Veröffentlichungstag der Anmeldung: 02.05.2003
(73) Patentinhaber: Trumpf Laser- und Systemtechnik GmbH, 71254 Ditzingen (DE)
(72) Erfinder: Zeller, Thomas, 71063 Sindelfingen (DE)
(74) Vertreter: Maser, Jochen

(56) Entgegenhaltungen:
- EP-A- 0 853 357
- DE-A- 3 330 626
- DE-A- 4 016 579
- GB-A- 2 313 472
- US-A- 4 680 771
- US-A- 4 777 639
- PATENT ABSTRACTS OF JAPAN Bd. 010, Nr. 032 (E-379), 7. Februar 1986 (1986-02-07) -& JP 60 189276 A (SUMITOMO DENKI KOGYO KK), 26. September 1985 (1985-09-26)
- PATENT ABSTRACTS OF JAPAN Bd. 1996, Nr. 10, 31. Oktober 1996 (1996-10-31) -& JP 08 155669 A (NIPPON LIGHT METAL CO LTD;MITSUBISHI ELECTRIC CORP), 18. Juni 1996 (1996-06-18)
- PATENT ABSTRACTS OF JAPAN Bd. 002, Nr. 035 (E-020), 9. März 1978 (1978-03-09) & JP 52 156642 A (NEC CORP), 27. Dezember 1977 (1977-12-27)
- PATENT ABSTRACTS OF JAPAN Bd. 012, Nr. 330 (E-655), 7. September 1988 (1988-09-07) & JP 63 094694 A (TOSHIBA CORP), 25. April 1988 (1988-04-25)
- PATENT ABSTRACTS OF JAPAN Bd. 013, Nr. 026 (E-706), 20. Januar 1989 (1989-01-20) & JP 63 229780 A (TOSHIBA CORP), 26. September 1988 (1988-09-26)

## Beschreibung

Die Erfindung betrifft eine Vorrichtung zur Strahlführung eines Laserstrahls mit zumindest einem optischen Element gemäß dem Oberbegriff des Anspruchs 1.

Die Lasertechnologie wird in den verschiedensten Fachgebieten eingesetzt. Beispielsweise werden für die flexible Materialbearbeitung CO₂-Laser eingesetzt, z.B. quadratisch gefaltete oder koaxiale CO₂-Laser.

Zur Erhöhung der Leistung sind quadratisch gefaltete Resonatoren entwickelt worden, bei denen aufgrund der Faltung des Lichtweges eine lange Entladungsstrecke trotz kompakter Bauweise gegeben ist. Am Ende der Entladungsstrecken sind optische Elemente zur Strahlführung vorgesehen, welche an Gehäuseabschnitten positioniert sind.

Bei den koaxialen CO₂-Lasern handelt es sich um instabile Resonatoren mit ringförmigem Entladungsraum, welche beispielsweise zur Strahlführung torusförmig ausgebildete optische Elemente aufweisen.

Die zur Strahlführung eingesetzten optischen Elemente sind in Abhängigkeit ihrer Funktion in ihrem Transmissions- und Reflexionsgrad unterschiedlich ausgebildet und angepasst. Es kommen optische Elemente zum Einsatz, die eine Totalreflexion ermöglichen als auch optische Elemente, die eine Teiltransmission mit unterschiedlichen Durchlässigkeitsgraden ermöglichen.

Bei den quadratisch gefalteten CO₂-Lasern wurde bislang eine Vorrichtung zur Aufnahme des optischen Elementes eingesetzt, welche einen ersten Ringkörper zur Auflage des optischen Elementes aufweist, der vakuumseitig zur Laserstrecke angeordnet ist. Über einen Zwischenkörper, der in radialer Richtung das optische Element umgibt, wird das optische Element zum Ringkörper positioniert. Auf den Zwischenkörper wird im Anschluss daran ein Haltekörper aufgesetzt, der das optische Element axial zu dem ersten Ringkörper fixiert. Durch Schraubverbindungen wird zunächst der Zwischenkörper zu dem Ringkörper fixiert. Im Anschluss daran wird der Haltekörper durch Spannschrauben, welche den Zwischenkörper durchdringen, zum Ringkörper ebenfalls fixiert. Diese Anordnung ist in der Montage des optischen Elementes sehr zeitaufwendig und erfordert eine hohe Präzision bei der Herstellung der Bauteilkomponenten. Durch das Fixieren des Haltekörpers zum Ringkörper über Spannschrauben kann zum einen aufgrund eines unterschiedlichen Anzugsmomentes der Spannschrauben eine nicht gleichmäßige Krafteinleitung auf das optische Element gegeben sein, wodurch Verspannungen im optischen Element auftreten. Gleichzeitig führen die Verspannungen der Verschraubung zur Unebenheit der Anlagefläche des optischen Elementes, wodurch eine geringere Wärmeleitung von dem optischen Element in den Ringkörper gegeben ist. Aus der Unebenheit der Anlagefläche folgt eine Deformation des optischen Elementes. Durch die kleinere Kontaktfläche gegenüber einer ideal planen Anlagefläche kann die Wärme schlechter aus dem optischen Element abgeführt werden und die Strahlqualität verschlechtert sich.

Bei den koaxialen CO₂-Lasern mit ihren instabilen Laserresonatoren wird die Laserstrahlung über eine Aussparung in einem Ringspiegel ausgekoppelt. Der Laserstrahl verlässt die Vakuumkammer durch ein transmittives, optisches Element, das den Abschluss der Vakuumkammer bildet. Erfolgt die Abdichtung des optischen Elementes z.B. durch Löten, ist die gelötete Verbindungsstelle beim Betrieb des Lasers einer Temperaturwechselbeanspruchung ausgesetzt. Dies hat zur Folge, dass die Verbindungsstelle im Laufe der Zeit undicht werden kann.

Aus der JP 60-189 276 geht gemäß Figur 4 ein mehrteiliges Gehäuse hervor, durch das ein optisches Element von einer Haltevorrichtung aufgenommen ist. Diese Haltevorrichtung umfasst an einem Gehäuseabschnitt einen Auflageabschnitt, an dem das optische Element anliegt. Zwischen dem Auflageabschnitt und dem optischen Element ist ein O-Ring zur Abdichtung vorgesehen, der auch zur Wärmeübertragung beiträgt. Dem Gehäuseabschnitt gegenüberliegend ist ein Halteelement vorgesehen, das über einen Dichtungsring das optische Element zum Auflageabschnitt positioniert. Am Halteelement greift ein Spannelement an, das über einen an dem Gehäuseabschnitt lösbar befestigten Gewindering mit dem Gehäuseabschnitt verbunden ist. Dieses mehrteilige Gehäuse weist den Nachteil auf, dass durch die mehrteilige Haltevorrichtung eine verspannungsfreie und einfache Montage nicht ermöglicht ist. Analoges gilt für die JP 52-156642.

Der Erfindung liegt nunmehr die Aufgabe zugrunde, eine Vorrichtung zur Strahlführung eines Laserstrahls mit zumindest einem optischen Element zu schaffen, welches abweichend von einem runden Durchmesser eine Außenkontur aufweist, die eine gute Wärmeableitung aus dem optischen Element sowie eine einfache und schnelle als auch spannungsfreie Montage des optischen Elementes ermöglicht und die erforderliche Dichtheit aufweist.

Diese Aufgabe wird durch die Merkmale des Anspruchs 1 gelöst.

Durch eine gleichmäßig verteilte Krafteinleitung einer Haltekraft mit einem an dem Gehäuseabschnitt angreifenden Spannelement, durch welches ein Halteelement an dem optischen Element angreift und zur Anlage an einem Auflageabschnitt des Gehäuseabschnittes kommt, ist eine verspannungsfreie Anordnung des optischen Elements abweichend von einem runden Außendurchmesser zum Auflageabschnitt an dem Gehäuseabschnitt gegeben, welches eine Außenkontur aufweist. Des weiteren ist dadurch ermöglicht, dass jede beliebige Geometrie eines optischen Elements einsetzbar ist. Dadurch kann eine spezifische Anpassung der Vorrichtung an unterschiedliche Strahlprofile ermöglicht sein. Insbesondere bei der Ausgestaltung des optischen Elementes abwelchend von einem runden Durchmesser in der Außenkontur ist vorgesehen, dass das optische Element durch einen Rahmen in einer Position deckungsgleich zur Austrittsöffnung im Gehäuseabschnitt fixiert ist. Dadurch kann das optische Element die Austrittsöffnung vollständig abdecken.

Diese Anpassung der optischen Elemente an das Strahlprofil weist den Vorteil auf, dass ein schnelles Abführen der in dem optischen Element durch die absorbierte Laserstrahlung entstehende Wärme ermöglicht ist. Darüber hinaus wird die Wärmeableitung durch die Anlage an dem Auflageabschnitt begünstigt, der die Öffnung des Gehäuseabschnitts umgibt. Dadurch können Deformationen des optischen Elements gering gehalten oder auch unterbunden sein, wodurch auch die Dichtheit erhöht ist.

Des weiteren weist die Dichtung oder ein dichtendes Dämpfungselement zwischen dem Halteelement und dem optischen Element den Vorteil auf, dass durch die unterschiedliche Wärmeausdehnung des optischen Elements und des Gehäuseabschnitts eine dichte Anordnung zwischen dem optischen Element und einem das optische Element umgebenden Gehäuseabschnitt oder einem das optische Element umgebenden Abschnitt des Halteelements gegeben ist. Gleichzeitig kann durch die Federwirkung der Dichtung ein hinreichender Anpressdruck des optischen Elements zum Auflageabschnitt des Gehäuseabschnitts aufrechterhalten bleiben, um eine gute Wärmeableitung sicherzustellen.

Darüber hinaus kann das optische Element durch die gleichmäßig verteilte Krafteinleitung vollständig an dem Auflageabschnitt anliegen und die Ebenheit der Anlagefläche erhalten bleiben, wodurch eine gute Wärmeableitung gegeben ist. Durch die gleichmäßig verteilte Krafteinleitung der Haltekraft mit einem Spannelement wird des weiteren ermöglicht, dass eine einfache Montage des optischen Elementes zum Gehäuseabschnitt gegeben ist. Das zumindest eine optische Element des zumindest einen Halteelements und das Spannelement können einfach und sicher nacheinander zum Gehäuseabschnitt montiert werden. Da das Spannelement die Wirkung eines Zentralverschlusses aufweist, kann des weiteren eine erhebliche Einsparung der Montagezeit erzielt werden. Durch die Anordnung eines Befestigungselementes an dem Gehäuseabschnitt für das Spannelement ist des weiteren eine Bauteilereduzierung gegeben, wodurch eine Verringerung der Herstellungskosten erzielt wird.

Nach einer vorteilhaften Ausgestaltung der Erfindung ist vorgesehen, dass das Spannelement als Schraubring ausgebildet ist. Dadurch ist ein in der Montage leicht zu handhabendes Spannelement gegeben. Der Einsatz des Schraubringes als Spannelement ermöglicht eine über die Umfangsfläche des Schraubringes gleichmäßig verteilte Krafteinleitung auf ein Halteelement, wodurch das optische Element mit einer gleichmäßigen Anpresskraft auf dem Auflageabschnitt des Gehäuseabschnittes anliegt.

Nach einer weiteren vorteilhaften Ausgestaltung der Erfindung ist vorgesehen, dass zwischen dem Halteelement und dem Spannelement eine Spannfläche vorgesehen ist, die zumindest eine abschnittsweise Ringfläche aufweist. Diese Ausgestaltung ermöglicht ein zwischen dem Spannelement und Haltering verringertes Reibmoment, so dass eine Übertragung der Axialkraft ohne zumindest teilweiser Rotation des Halteelements ermöglicht ist, wodurch das optische Element ohne Veränderung seiner vorfixierten Lage zum Auflageabschnitt gedrückt wird.

Nach einer weiteren vorteilhaften Ausgestaltung der Erfindung ist vorgesehen, dass das Halteelement eine Anschlagfläche als Anziehsicherung aufweist. Dadurch kann bei Überschreitung eines maximalen Drehmomentes für das Anziehen des Spannelementes eine sichere Montage des optischen Elements ohne Beschädigung gegeben sein. Da das Halteelement über eine Dichtung oder ein dichtendes Dämpfungselement an dem optischen Element anliegt, ist auch eine verspannungsfreie Positionierung des optischen Elements zum Auflageabschnitt gegeben. Alternativ kann auch vorgesehen sein, dass die Anschlagfläche an einem Gehäuseabschnitt oder weiteren Bauteil angeordnet ist.

Nach einer weiteren vorteilhaften Ausgestaltung der Erfindung ist vorgesehen, dass der Auflageabschnitt des Gehäuses durch Drehen oder Fräsen mit Diamant, Polykristallindiamant (PKD), Keramiken als auch Schleifen, Präzisionsdrehen oder Läppen hergestellt ist. Durch die damit erzielte geringe Rauhigkeit weist der Auflageabschnitt eine höhere Kontaktfläche zwischen dem optischen Element und dem Auflageabschnitt auf, die zu einer verbesserten Wärmeableitung führt. Des weiteren kann durch diese Bearbeitung ein hohes Maß an Ebenheit, beispielsweise weniger als 10 µm, vorzugsweise weniger als 1 µm, erzielt werden, wodurch die Verlustleistung, welche sich in einer Erwärmung des optischen Elements niederschlägt, verringert wird.

Eine vorteilhafte Ausgestaltung der Erfindung sieht vor, dass das optische Element aus Diamant, Zinkselenid, Galliumarsenid, Silicium oder Kupfer ausgebildet ist. In Abhängigkeit des Verwendungszweckes der Vorrichtung, dem Lasertyp und der Leistung des Lasers kann der Werkstoff für das optische Element ausgewählt sein. Beispielsweise wird Silizium bei einem quadratisch gefalteten CO₂-Lasers als Umlenkspiegel bis zu 4 kW eingesetzt und Kupfer für einen höheren Leistungsbereich. Zinkselenid wird bevorzugt als Auskoppelspiegel in einem quadratisch gefalteten CO₂-Laser eingesetzt. Bei koaxialen CO₂-Lasern kann bei geringen Leistungen Zinkselenid oder über alle Leistungsbereiche Diamant als Werkstoff für das optische Element eingesetzt werden.

Nach einer vorteilhaften Ausführungsform der Erfindung ist vorgesehen, dass ein auf dem Auflageabschnitt anliegender Bereich des optischen Elementes in alle Richtungen betragsmäßig gleich ist. Dadurch kann eine gleichmäßige Wärmeableitung gegeben sein.

Nach einer weiteren vorteilhaften Ausgestaltung der Erfindung ist vorgesehen, dass zwischen dem Gehäuseabschnitt und dem Rahmen als auch zwischen dem optischen Element und dem Rahmen jeweils eine Dichtung vorgesehen ist. Dadurch kann in einfacher Weise eine vakuumdichte Anordnung geschaffen werden. Durch die getrennte Ausgestaltung kann eine Vereinfachung in der Montage gegeben sein. Zusätzlich kann eine Erhöhung der Dichtigkeit ermöglicht werden.

Nach einer weiteren vorteilhaften Ausgestaltung der Erfindung ist vorgesehen, dass das optische Element eine an das Strahlproril angepasste Außenkontur aufweist, die vorzugsweise rechteckförmig, bananenförmig oder dergleichen und insbesondere aus Diamant hergestellt ist. Insbesondere beim Einsatz zur Auskopplung eines Laserstrahle aus einem koaxialen CO₂-Laser ist diese Ausführungsform vorteilhaft. Durch die Anpassung der Geometrie des optischen Elementes an das ausgekoppelte Strahlprofil können die Herstellungskosten des optischen Elementes, insbesondere bei der Verwendung von Diamant reduziert werden. Gleichzeltig kann die durch die absorbierte Laserstrahlung entstehende Wärme unmittelbar über die Anlagefläche in den Gehäuseabschnitt abgeführt werden. Darüber hinaus kann durch die Einbringung einer zentralen Haltekraft über das Spannelement und die Trennung der Kraftübertragung auf ein Halteelement auch bei nicht runden Geometrien der optischen Elemente eine gute Dichtigkeit erzielt werden.

Vorzugsweise werden Industriediamanten eingesetzt. Aufgrund der hohen Wärmeleitfähigkeit von Diamant kann die Wärme, die durch die absorbierte Laserstrahlung im optischen Element entsteht, sehr schnelle in den gekühlten Gehäuseabschnitt abgeführt werden. Darüber hinaus ist eine geringe Wärmeausdehnung und eine hohe mechanische Festigkeit gegeben. Dadurch kann das optische Element seine Ausgangsform im wesentlichen beibehalten. Des weiteren weist Diamant eine hohe Lebensdauer auch bei höheren Leistungen auf. Bei instabilen Resonatoren, wie dies beispielsweise bei koaxialen CO₂-Lasern der Fall ist, wird der Laserstrahl nach dem Austritt aus der Vakuumkammer durch Spiegel und durch eine Blende geformt. Hierbei muss der Fokus des Laserstrahls in der Blende liegen. Durch übermäßige Erwärmung des optischen Elementes und einer daraus resultierenden Deformation wäre eine Ablenkung des austretenden Laserstrahls bzw. eine Fokusverschiebung in Strahlrichtung gegeben. Dies könnte zur Beschädigung der Blende im Strahlteleskop führen und kann durch die vorteilhafte Ausgestaltung unterbunden sein.

Anhand der nachfolgenden Zeichnungen und der Beschreibung werden bevorzugte Ausführungsbeispiele der Erfindung näher beschrieben. Es zeigen:
- Figur 1: eine schematische Darstellung im Querschnitt einer erfindungsgemäßen Vorrichtung,
- Figur 2: eine schematische Draufsicht der Vorrichtung gemäß Figur 1,
- Figur 3: eine Explosionsdarstellung der Vorrichtung gemäß Figur 1, in der die Einbaureihenfolge der Bauteile dargestellt ist und
- Figur 4: eine schematische Darstellung im Querschnitt einer alternativen Vorrichtung zu Figur 1.

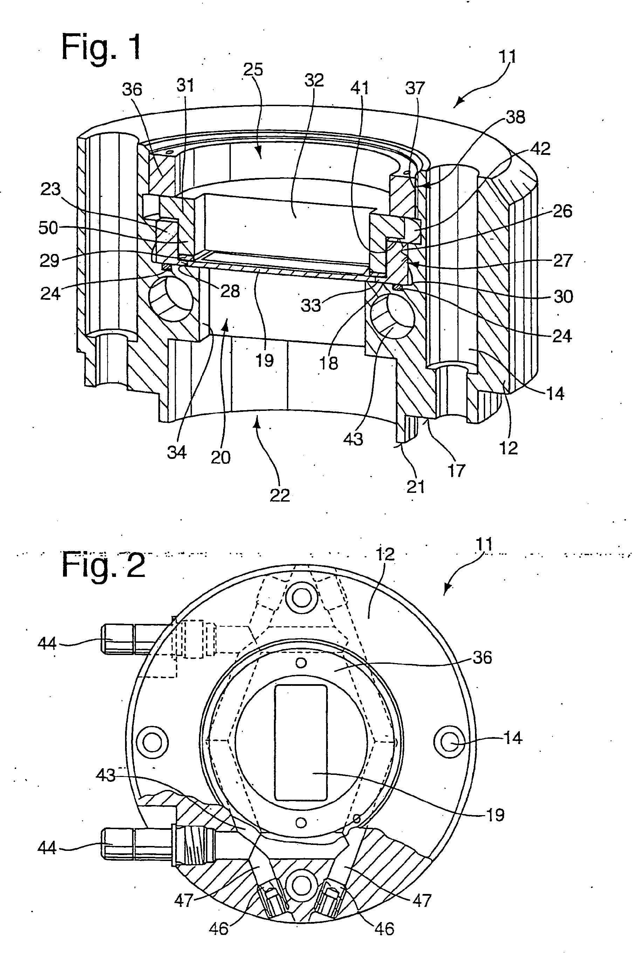

In den Figuren 1 bis 3 ist eine erste Ausführungsform einer erfindungsgemäßen Vorrichtung 11 zur Strahlführung eines Laserstrahls dargestellt. Diese Vorrichtung 11 ist beispielsweise für die Auskopplung eines Laserstrahls bei koaxialen CO₂-Lasern vorgesehen, welche einen typischen Leistungsbereich von beispielsweise 500 W bis 2000 W aufweisen.

Die Vorrichtung 11 gemäß Figur 1 weist einen Gehäuseabschnitt 12 auf. Im äußeren Bereich des Gehäuseabschnitts 12 sind gestufte Durchgangsbohrungen 14 vorgesehen, um mittels Schrauben den Gehäuseabschnitt 12 beispielsweise zum Resonator zu fixieren. Beispielsweise kann der Gehäuseabschnitt 12 an einem Verschlussdeckel eines Resonators eines koaxialen CO₂-Lasers angeordnet sein. Alternativ kann auch vorgesehen sein, dass der Gehäuseabschnitt 12 in einem Verschlussdeckel eines koaxialen CO₂-Lasers integriert ist.

Zur Montage der Vorrichtung 11 an einem Resonator ist eine Anflanschfläche 17 vorgesehen, welche parallel zu einem Auflageabschnitt 18 für ein optisches Element 19 mit einer hohen Präzision ausgebildet ist. Zur zusätzlichen Führung des Gehäuseabschnitts 12 an einem Resonator oder Gehäuseteil eines Resonators kann ein umlaufender Bund 21 vorgesehen sein. Dieser oder die Anflanschfläche 17 umgibt eine Stufenbohrung 22, welche an den Auflageabschnitt 18 angrenzend einen an das Strahlprofil vorzugsweise angepassten Querschnitt aufweist. Die daran angrenzende Austrittsöffnung 20 kann sowohl rund als auch rechteckig als auch bananenförmig ausgebildet sein. Jede weitere Geometrie, welche für die Anpassung an das Strahlprofil zur Strahlführung eines Laserstrahis erforderlich ist, kann ebenfalls eingebracht werden.

Das optische Element 19 liegt mit seinem schmalen Randbereich auf dem Auflageabschnitt 18 auf. Ein Rahmen 23 umgibt das optische Element 19 vorzugsweise vollständig und weist zum optischen Element 19 eine Spielpassung auf. Während der Strahlführung des Laserstrahls entsteht Wärme in dem optischen Element 19 durch die absorbierte Laserstrahlung. Gegebenenfalls auftretende Ausdehnungen aufgrund der Erwärmung ermöglichen durch die Spielpassung eine verspannungsfreie Positionierung.

Zwischen dem Rahmen 23 und dem Auflageabschnitt 18 ist eine Dichtung 24 vorgesehen, um die Austrittsöffnung 20 der Stufenbohrung 22 vakuumdicht abzuschließen. Der Rahmen 23 weist eine äußere Umfangsfläche 26 auf, durch welche der Rahmen 23 in einem Bohrungsabschnitt 27 des Gehäuseabschnitts 12 geführt ist. Zur vollständigen Anlage an den Auflageabschnitt 18 ist in dem Bohrungsabschnitt 27 eine an den Auflageabschnitt 18 angrenzende Hinterschneidung 30 vorgesehen. Der Rahmen 23, der auch die Funktion eines Zwischenkörpers oder Adapters zur Anpassung an unterschiedliche Körperformen der optischen Elemente 19 aufweist, ist scheibenförmig ausgebildet und weist eine Ausnehmung 28 auf, welche größer als eine Öffnung 25 für das optische Element 19 ist. Die Ausnehmung 28 ist derart ausgebildet, dass um die Öffnung 25 des Rahmens 23 eine stegförmige Auflagefläche 33 ausgebildet ist, auf welche nach dem Einbringen des optischen Elements 19 eine weitere Dichtung 29 zur Anlage kommt. Diese Dichtung 29 überdeckt den Spalt zwischen dem optischen Element 19 und der stegförmigen Auflagefläche 33 des Rahmens 23, um in Strahlrichtung eine Abdichtung zu ermöglichen.

Ein Halteelement 31 legt die Dichtung 29 zum optischen Element 19 und der stegförmigen Auflagefläche 33 des Rahmens 23 fest. Dabei ist vorzugsweise vorgesehen, dass eine innere Fläche 32 des Halteelementes 31 gegenüber einer Umfangsfläche 34 der Austrittsöffnung 20 der Stufenbohrung 22 bündig ist oder dieser gegenüber zurückspringt. Ebenso ist die Größe der Dichtung 29 ausgebildet. Dadurch wird erzielt, dass der durch die Umfangsfläche 34 gebildete freie Bereich zur Strahlführung des Laserstrahles durch die strahlaustrittsseitig positionierte Dichtung 29 und das Halteelement 31 nicht verkleinert wird.

Das Halteelement 31 wird über ein Spannelement 36 fixiert. Das Spannelement 36 ist vorteilhafterweise als Spannring ausgebildet und greift über ein Außengewinde 37 an einem Befestigungsabschnitt 38 des Gehäuseabschnitts 12 an. Dadurch ist eine zentrale Krafteinleitung auf das Halteelement 31 ermöglicht. Das Außengewinde 37 kann auch als Feingewinde ausgebildet sein, so dass ein Anzugsmoment des Spannelementes 36 vorzugsweise über einen Drehmomentenschlüssel sehr feinfühlig eingestellt werden kann. Alternativ zu diesem Spannelement 36 können auch weitere Spannelemente eingebracht werden, welche die Funktion erfüllen, dass eine feindosierte Zustellung der Haltekraft auf das Halteelement 31 ermöglicht wird, um das optische Element 19 zum Auflageabschnitt 18 verspannungs- und verkippungsfrei zu fixieren.

Vorteilhafterweise ist vorgesehen, dass die Reibflächen zwischen dem Halteelement 31 und dem Spannelement 36 im Durchmesser möglichst klein sind, damit das entstehende Reibmoment beim Anziehen des Spannelementes 36 klein ist. Um eine genaue Ausrichtung des optischen Elementes 19 zur Austrittsöffnung 20 zu ermöglichen und ein Verdrehen zu verhindern, kann zusätzlich vorgesehen sein, dass zur lagerichtigen Fixierung des Rahmens 23 ein Positionierstift zwischen dem Gehäuseabschnitt 12 und dem Rahmen 23 vorgesehen ist. Das Halteelement 31 kann vorzugsweise als Anziehsicherung eine Anschlagfläche 41 aufweisen, welche bei einem überhöhten Anzugsmoment auf einer Stirnfläche 42 des Rahmens 23 zur Anlage kommt. Dadurch können eine Quetschung der Dichtung 29 und gegebenenfalls Beschädigungen des optischen Elements 19 ausbleiben. Alternativ kann auch vorgesehen sein, dass die Anschlagfläche 41 hervorspringend an der Stirnfläche 42 des Rahmens 23 vorgesehen ist.

Der Gehäuseabschnitt 12 ist bevorzugt aus einem Material mit hoher Wärmeleitfähigkeit ausgebildet. Beispielsweise werden Aluminiumlegierungen oder dergleichen eingesetzt. Diese weisen darüber hinaus den Vorteil auf, dass sowohl eine kostengünstige als auch präzise Bearbeitung gegeben ist. Der Auflageabschnitt 18 wird hochpräzise durch Drehen oder Fräsen mit Diamant, Polykristallindiamant (PKD), Keramiken als auch Schleifen, Präzisionsdrehen oder Läppen hergestellt. Gleichzeitig weist dieser Auflageabschnitt 18 ein hohes Maß an Ebenheit auf, um eine vollflächige Anlage des Randabschnittes des optischen Elementes 19 zu ermöglichen. Dadurch kann eine gute Wärmeableitung erzielt werden. Zusätzlich ist nahe dem Auflageabschnitt 18 ein Kühlkanal 43 vorgesehen, der vorzugsweise die Austrittsöffnung 20 nahe dem Auflageabschnitt 18 vollständig umgibt.

In Figur 2 ist beispielsweise die Ausgestaltung eines derartigen Kühlkanales 43 in der Draufsicht auf den Gehäuseabschnitt 12 dargestellt. Der das optische Element 19 umgebende Kühlkanal 43 weist Anschlussstutzen 44 zum Zuführen und Abführen eines Kühlflüssigkeitsmediums auf. Der Kühlkanal 43 wird beispielsweise durch Bohrungen hergestellt, die derart in den Gehäuseabschnitt 12 eingebracht werden, dass diese ineinander münden. Durch Verschlussstopfen 46 sind Bohrungsabschnitte 47, die zum Herstellen der Kühlkanalabschnitte erforderlich sind, mediumsdicht verschlossen, so dass ein umlaufender Kühlkanal 43 ausgebildet ist.

Das optische Element 19 ist beim Einsatz dieser Vorrichtung in einem koaxialen CO₂-Laser vorteilhafterweise aus Diamant ausgebildet. Dieser Werkstoff weist den Vorteil einer hohen Wärmeleitfähigkeit auf. Darüber hinaus weist Diamant einen kleinen Wärmeausdehnungskoeffizienten auf, wodurch die Wärmeausdehnungen gering sind. Auf dem optischen Element 19 ist eine Beschichtung aufgebracht, deren Fläche nur geringfügig kleiner als die Austrittsöffnung 20 der Stufenbohrung 22 ausgebildet ist. Dadurch ist der Randbereich des optischen Elementes 19, der an dem Auflageabschnitt 18 anliegt, frei von der Beschichtung, wodurch eine hohe Wärmeableitung ermöglicht ist. Durch die Anpassung der Geometrie des optischen Elementes 19 an das Strahlprofil ist ermöglicht, dass die Kosten für die Herstellung eines optischen Elementes 19 aus Diamant reduziert werden. Des weiteren weisen die aus Diamant ausgebildeten optischen Elemente 19 den Vorteil auf, dass bei Absorption der Laserstrahlung und Erwärmung in dem optischen Element die Geometrie erhalten bleibt. Eine Veränderung in Form einer thermischen Linse oder dergleichen ist nicht gegeben. Dadurch kann ein ablenkungsfreier Austritt des Laserstrahles gegeben sein.

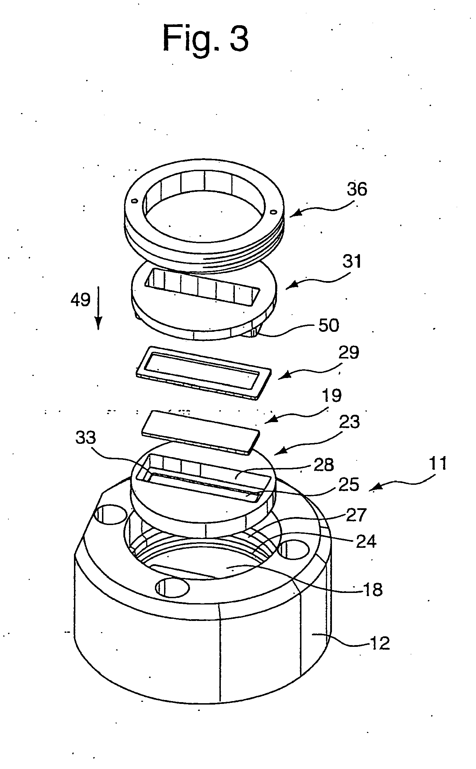

In Figur 3 ist eine Explosionsdarstellung der erfindungsgemäßen Vorrichtung gemäß Figur 1 und 2 dargestellt. Durch ein nacheinander Einsetzen der Teile in der dargestellten Reihenfolge in Pfeilrichtung 49 kann eine schnelle und sichere Montage eines optischen Elementes 19 in dem Gehäuseabschnitt 12 erfolgen. Daraus ist auch ersichtlich, dass eine bestimmte Ausrichtung der Teile und lagerichtige Positionlerung sich aufgrund der Geometrien von alleine ergibt. Auch wird aus dieser Darstellung deutlich, dass der Gehäuseabschnitt 12 auch ein Teil eines Verschlusselementes oder Deckels eines Resonators sein kann. Die einzelnen Komponenten wie das optische Element 19, der Rahmen 23, die Dichtungen 24 und 29, das Halteelement 31 als auch das Spannelement 36 können unabhängig der weiteren Ankopplung des Gehäuseabschnitts 12 eingesetzt werden.

Aufgrund der Einbaureihenfolge, wonach zunächst der Rahmen 23 in den Bohrungsabschnitt 27 eingesetzt wird, kann das optische Element 19 in seiner endgültigen Position zum Auflageabschnitt 18 des Gehäuseabschnitts 12 positioniert werden. Das nachfolgende Einlegen der Dichtung 29, dem Aufsetzen des Halteelementes 31 und das Anziehen des Spannelementes 36 ermöglicht eine Fixierung des optischen Elementes 19 ohne Verdrehung oder Verkippung, so dass eine vollständige Anlage des Randbereiches des optischen Elementes 19 auf dem Auflageabschnitt 18 ohne Beschädigung dieser Flächen gegeben ist.

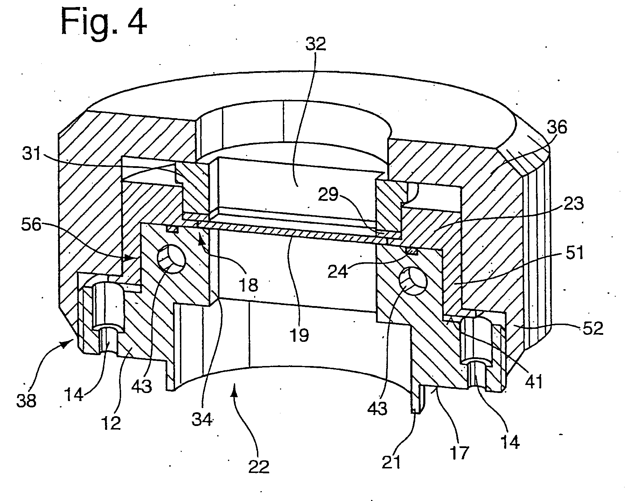

In Figur 4 ist eine alternative Ausführungsform zu Figur 1 dargestellt. Der prinzipielle Aufbau und die Montagereihenfolge, wie dies in Figur 3 dargestellt ist, werden beibehalten. Abweichend zu der Ausführungsform in Figur 1 bis 3 ist bei dieser Ausführungsform gemäß Figur 4 vorgesehen, dass der Rahmen 23 mit einer umlaufenden Schulter 51 einen Außenumfang 56 des Gehäuseabschnitts 12 umgreift. In Analogie umgreift das Spannelement 36 die Schulter 51 des Rahmens 23, um durch eine Schraubverbindung am Befestigungsabschnitt 38 des Gehäuseabschnitts 12 anzugreifen. An einem auskragenden Ende 52 der Schulter 51 ist eine Anschlagfläche 41 vorgesehen, welche wiederum als Anziehsicherung für das Spannelement 36 dient. Diese in Figur 4 dargestellte Ausführungsform zeigt im Gegensatz zu der in den Figuren 1 bis 3 dargestellten Ausführungsform, dass anstelle eines Einbaus der Komponenten in einen Gehäuseabschnitt 12 auch eine Fixierung der Komponenten durch zumindest teilweise Umgreifen des Gehäuseabschnitts 12 ermöglicht ist. Im übrigen gelten die Ausführungen zu den Figuren 1 bis 3.

## Patentansprüche

1. Vorrichtung zur Strahlführung eines Laserstrahls mit zumindest einem optischen Element (19), welches mit einem Halteelement (31) zu einem Auflageabschnitt (18) positioniert ist und mit einem Spannelement (36), welches das optische Element (19) zum Auflageabschnitt (18) eines Gehäuseabschnitts (12) fixiert, wobei der den Auflageabschnitt (18) aufweisende Gehäuseabschnitt (12) einen an diesem Gehäuseabschnitt (12) angeordneten Befestigungsabschnitt (38) aufweist, an welchem das Spannelement (36) zur gleichmäßig verteilten Krafteinleitung einer Haltekraft angreift und das optische Element (19) unter Zwischenschaltung des zumindest einen Halteelements (31) zum Auflageabschnitt (18) positioniert und mit einer Dichtung (29), die zwischen dem optischen Element (19) und dem Halteelement (31) an einem Bereich des optischen Elements (19) vorgesehen ist, welcher einem auf dem Auflageabschnitt (18) aufliegenden Bereich des optischen Elements (19) gegenüberliegt, **dadurch gekennzeichnet,**
- **dass** zwischen dem Halteelement (31) und dem Auflageabschnitt (18) des Gehäuseabschnitts (12) ein Rahmen (23) vorgesehen ist, der eine Öffnung (25) zur Aufnahme des optischen Elementes (19) umfasst, welches eine von einem runden Durchmesser abweichende Außenkontur Zur Aupussung der Geometrie des optischen Elementes art das ausgekoppelte strahlprofil des Laserstrals aufweist, wobei um die Öffnung (25) des Rahmens (23) eine stegförmige Anlagefläche (33) des Rahmens (23) ausgebildet ist und
- **dass** das in der Öffnung (25) des Rahmen (23) eingesetzte optische Element (19) deckungsgleich zur Austrittsöffnung (20) im Gehäuseabschnitt (12) fixiert ist und an dem Auflageabschnitt (18) aufliegt und die Dichtung (29) einen Spalt zwischen dem optischen Element (19) und der stegförmigen Amlagefläche (33) des Rahmens (23) überdeckt.

2. Vorrichtung nach Anspruch 1, **dadurch gekennzeichnet, dass** das Spannelement (36) als Schraubring ausgebildet ist.

3. Vorrichtung nach Anspruch 1 oder 2, **dadurch gekennzeichnet, dass** zwischen dem Spannelement (36) und dem Halteelement (31) eine Spannfläche vorgesehen ist, die zumindest eine abschnittsweise Ringfläche aufweist.

4. Vorrichtung nach einem der vorhergehenden Ansprüche, **dadurch gekennzeichnet, dass** das Halteelement (31) eine Anschlagfläche (41) als Anziehsicherung aufweist.

5. Vorrichtung nach einem der vorhergehenden Ansprüche, **dadurch gekennzeichnet, dass** der Auflageabschnitt (18) durch Drehen oder Fräsen mit Diamant, Polykristallindiamant (PKD), Keramiken als auch Schleifen, Präzisionsdrehen oder Läppen bearbeitet ist.

6. Vorrichtung nach einem der vorhergehenden Ansprüche, **dadurch gekennzeichnet, dass** der Auflageabschnitt (18) eine Ebenheit von weniger als 10 µm, vorzugsweise 1 µm, aufweist.

7. Vorrichtung nach einem der vorhergehenden Ansprüche, **dadurch gekennzeichnet, dass** das optische Element aus Diamant, Zinkselenid, Galliumarsenid, Silizium oder Kupfer ausgebildet ist.

8. Vorrichtung nach Anspruch 1, **dadurch gekennzeichnet, dass** der auf dem Auflageabschnitt (18) liegende Bereich des optischen Elementes (19) in alle Richtungen betragsmäßig gleich ist.

9. Vorrichtung nach Anspruch 1, **dadurch gekennzeichnet, dass** das Halteelement (31) in eine Ausnehmung (28) des Rahmens (23) einsetzbar ist und das optische Element (19) und den Rahmen (23) zum Auflageabschnitt (18) fixiert.

10. Vorrichtung nach Anspruch 1, **dadurch gekennzeichnet, dass** zwischen dem Gehäuseabschnitt (12) und dem Rahmen (23) jeweils eine Dichtung (24) vorgesehen ist.

11. Vorrichtung nach Anspruch 1, **dadurch gekennzeichnet, dass** das optische Element (19) eine an ein Strahlprofil des Laserstrahls angepasste Außenkontur aufweist, die vorzugsweise rechteckförmig oder bananenförmig ausgebildet und insbesondere aus Diamant hergestellt ist.

## Claims

1. A device for beam guiding a laser beam, comprising:
at least one optical element (19) which with a retaining element (31) is positioned with respect to a supporting section (18),
a clamping element (36) that fixes the optical element (19) to the supporting section (18) of a housing section (12) and
a fastening section (38) on the housing section (12) having the supporting section (18), on which the clamping element (38) engages for force introduction of a retaining force, which force introduction is equal in amount and at least one retaining element (31) is interpositioned between the clamping element (31) and the optical element (19),
a seal (29) which is provided between the optical element (19) and the retaining element (31) at a region of the optical element (19), which region is positioned opposite to a region of the supporting section (18) for the optical element (19), **characterized in**
- **that** a frame (23) is provided between the retaining element (31) and the supporting surface (18) of the housing section (12), having an opening (25) for receiving the optical element (19), whose outer contour differs from a round diameter for adapting the geometry of the optical element to the beam profile of the laser beam, which is coupled-out, and the opening (25) of the frame (23) is constituted as a bar-shaped seating surface (33) of the frame (23) surrounding the frame (23) and
- **that** the optical element (19) inserted in the frame (23) is fixed in a position coincident with the exit opening (20) in the housing section (12) and is provided on the supporting section (18) and a gap between the optical element (19) and the bar-shaped seating surface (33) is covered by the seal (29).

2. Device according to claim 1, **characterized in that** the clamping element (36) comprises a screw ring.

3. Device according to claim 1 or 2, **characterized in that** a clamping surface provided between the clamping element (36) and the retaining element (31), and having at least one sectionally annular surface.

4. Device according to one of the preceding claims, **characterized in that** the retaining element (31) comprises a stop surface (41) as a mounting safeguard.

5. Device according to one of the preceding claims, **characterized in that** the supporting section (18) is processed by turning or milling with diamond, polycrystalline diamond (PKD), ceramics, and also by grinding, precision turning, or lapping.

6. Device according to one of the preceding claims, **characterized in that** the supporting section (18) has a surface roughness of less than 10 µm, in particular less than 1µm.

7. Device according to one of the preceding claims, **characterized in that** the optical element consists of diamond, zinc selenide, gallium arsenide, silicon, or copper.

8. Device according to claim 1, **characterized in that** the region abutting the support section (18) is equal in amount in all directions.

9. Device according to claim 1, **characterized in that** the frame (23) has a recess (28) and the retaining element (31) is inserted in the recess (28) of the frame (23) and fixes the optical element (19) and the frame (23) to the supporting section (18).

10. Device according to claim 1, **characterized in that** a respective seal (24) is provided between the housing section (12) and the frame (23).

11. Device according to claim 1, **characterized in that** the optical element (19) has an outer contour adapted to a beam profile, and preferably the outer contour of the optical element (19) comprises a rectangular or banana shape and the optical element (19) is in particular produced from diamond.

## Revendications

1. Dispositif de guidage d'un faisceau laser, qui présente au moins un élément optique (19) positionné par un élément de maintien (31) par rapport à une partie de pose (18) et doté d'un élément de serrage (36) qui fixe l'élément optique (19) sur la partie de pose (18) d'une partie de boîtier (12), la partie de boîtier (12) qui présente la partie de pose (18) présentant une partie de fixation (38) disposée sur cette partie de boîtier (12) et sur laquelle l'élément de serrage (36) s'engage pour répartir uniformément l'application d'une force de maintien, l'élément optique (19) étant positionné par rapport à la partie de pose (18) en intercalant le ou les éléments de maintien (31), l'élément optique présentant un joint d' étanchéité (29) prévu entre l'élément optique (19) et l'élément de maintien (31) sur une portion de l'élément optique (19) située face à une portion de l'élément optique (19) qui repose sur la partie de pose (18),
**caractérisé en ce que**
un cadre (23) est prévu entre l'élément de maintien (31) et la partie de pose (18) de la partie de boîtier (12) et comprend une ouverture (25) de réception de l'élément optique (19), **en ce que** l'élément optique présente un contour extérieur différent d'un cercle qui permet l'adaptation de la géométrie de l'élément optique au profil du faisceau laser émis, une surface de pose (33) en forme de nervure du cadre (23) étant formée autour de l'ouverture (25) du cadre (23),
**en ce que** l'élément optique (19) inséré dans l'ouverture (25) du cadre (23) est fixé de manière à recouvrir l'ouverture de sortie (20) de la partie de boîtier (12) et repose sur la partie de pose (18) et **en ce que** le joint d'étanchéité (29) recouvre un interstice situé entre l'élément optique (19) et la surface de pose (33) en forme de nervure du cadre (23).

2. Dispositif selon la revendication 1, **caractérisé en ce que** l'élément de serrage (36) a la forme d'une bague filetée.

3. Dispositif selon les revendications 1 ou 2,
**caractérisé en ce qu'**une surface de serrage dont au moins certaines parties forment une surface annulaire est prévue entre l'élément de serrage (36) et l'élément de maintien (31).

4. Dispositif selon l'une des revendications précédentes, **caractérisé en ce que** l'élément de maintien (31) présente une surface de butée (41) qui sert de protection contre le coinçage.

5. Dispositif selon l'une des revendications précédentes, **caractérisé en ce que** la partie de pose (18) est usinée par tournage ou fraisage au diamant, au diamant polycristallin (PKD), à la céramique ou également par meulage, tournage de précision ou rodage.

6. Dispositif selon l'une des revendications précédentes, **caractérisé en ce que** la partie de pose (18) présente une planéité d'au moins 10 µm et de préférence de 1 µm.

7. Dispositif selon l'une des revendications précédentes, **caractérisé en ce que** l'élément optique est réalisé en diamant, en séléniure de zinc, en arséniure de gallium, en silicium ou en cuivre.

8. Dispositif selon la revendication 1, **caractérisé en ce que** la portion de l'élément optique (19) située sur la partie de pose (18) a les mêmes dimensions dans toutes les directions.

9. Dispositif selon la revendication 1, **caractérisé en ce que** l'élément de maintien (31) peut être inséré dans une découpe (28) du cadre (23) et **en ce que** l'élément optique (19) et le cadre (23) sont fixés par rapport à la partie de pose (18).

10. Dispositif selon la revendication 1, **caractérisé en ce qu'**un joint d'étanchéité (24) est prévu entre la partie de boîtier (12) et le cadre (23).

11. Dispositif selon la revendication 1, **caractérisé en ce que** l'élément optique (19) présente un contour extérieur adapté au profil du faisceau laser, de préférence configuré en forme de rectangle ou de banane, et est en particulier réalisé en diamant.
